# EUROPEAN PATENT APPLICATION

(11) **EP 4 852 395 A1**
(43) Date of publication of application: **09.12.2026**
(21) Application number: 24926677.6
(22) Date of filing: 29.08.2024
(51) Int. Cl.: H04L 47/20, H04L 49/111

(54) **POWER CONSUMPTION OPTIMIZATION METHOD FOR SWITCHING CHIP, AND RELATED DEVICE THEREOF**

(30) Priority: 28.02.2024 CN 202410223654
(71) Applicant: HUAWEI TECHNOLOGIES CO., LTD., Shenzhen, Guangdong 518129 (CN)
(72) Inventor: ZHOU, Yigang, Shenzhen, Guangdong 518129 (CN); YANG, Yibo, Shenzhen, Guangdong 518129 (CN); CHEN, Hui, Shenzhen, Guangdong 518129 (CN)
(74) Representative: Huawei European IPR
(86) International application number: PCT/CN2024/115353
(87) International publication number: WO 2025/179810

(57) **Abstract**

This application discloses a power consumption optimization method for a switch chip, and a related device, to avoid inflated power consumption of the switch chip. The method in this application includes: In an operating process of the switch chip, the switch chip may sample traffic that is being forwarded by the switch chip, to obtain sampled traffic. Then, the switch chip may detect, based on the sampled traffic, whether a plurality of artificial intelligence AI chips have switched between the computing phase and the communication phase, to determine whether to adjust subsequent power consumption for to-be-forwarded traffic. If the plurality of AI chips have switched from the communication phase to the computing phase, the switch chip may reduce the power consumption for the to-be-forwarded traffic, and forward the to-be-forwarded traffic at reduced power consumption. If the plurality of AI chips have switched from the computing phase to the communication phase, the switch chip may increase the power consumption for the to-be-forwarded traffic, and forward the to-be-forwarded traffic at increased power consumption.

## Description

This application claims priority to Chinese Patent Application No. 202410223654.4, filed with the China National Intellectual Property Administration on February 28, 2024 and entitled "POWER CONSUMPTION OPTIMIZATION METHOD FOR SWITCH CHIP, AND RELATED DEVICE", which is incorporated herein by reference in its entirety.

### TECHNICAL FIELD

Embodiments of this application relate to the field of chip technologies, and in particular, to a power consumption optimization method for a switch chip, and a related device.

### BACKGROUND

With the popularity of artificial intelligence (artificial intelligence, AI) training clusters, to improve training efficiency of an AI training cluster for a neural network model, an interconnection infrastructure device with an ultra-high bandwidth may be introduced into the AI training cluster. The device serves as an interconnection node to connect a plurality of computing nodes in the cluster, thereby reducing communication latency between the computing nodes and enhancing training efficiency of the AI training cluster.

An AI training cluster provided by related technologies may include a plurality of computing nodes and interconnection nodes. The plurality of computing nodes may be embodied as a plurality of AI chips, and the interconnection node may be embodied as a switch chip. A receive end of the switch chip is connected to a part of the AI chips, and a transmit end of the switch chip is connected to another part of the AI chips. The model training performed by the plurality of AI chips involves a plurality of iterations, and each iteration includes a computing phase and a communication phase. In the computing phase, communication traffic between the AI chips is close to zero, while in the communication phase, communication traffic between the AI chips is very large. The switch chip can ensure normal communication between the AI chips in both the computing phase and the communication phase.

However, to ensure communication quality between the AI chips, the switch chip often needs to remain in a full-load operating state continuously, resulting in excessively high power consumption of the switch chip.

### SUMMARY

Embodiments of this application provide a power consumption optimization method for a switch chip, and a related device, to make power consumption of the switch chip match an actual workload, thereby avoiding inflated power consumption of the switch chip and achieving power consumption optimization.

A first aspect of embodiments of this application provides a power consumption optimization method for a switch chip. The switch chip may be configured to forward traffic between a plurality of AI chips, that is, forward traffic of a part of the AI chips to another part of the AI chips for processing. The plurality of AI chips may be configured to train a neural network. In a training process of the neural network, the plurality of AI chips may be in a computing phase or a communication phase (that is, the plurality of AI chips may operate in a computing state or a communication state). When the plurality of AI chips are in the computing phase, traffic between the plurality of AI chips is close to zero, and when the plurality of AI chips are in the communication phase, there is a large amount of traffic between the plurality of AI chips. The method includes the following steps.

In an operating process of the switch chip, the switch chip may sample traffic forwarded by the switch chip, to obtain sampled traffic. Then, the switch chip may detect, based on the sampled traffic, whether the plurality of AI chips have switched between the computing phase and the communication phase, to determine whether to adjust chip power consumption for to-be-forwarded traffic.

If it is determined, based on the sampled traffic, that the plurality of AI chips have not switched between the computing phase and the communication phase, the switch chip does not adjust the power consumption for the to-be-forwarded traffic, and subsequently forwards the to-be-forwarded traffic at the current power consumption. If it is determined, based on the sampled traffic, that the plurality of AI chips have just switched from the communication phase to the computing phase, the switch chip reduces the power consumption for the to-be-forwarded traffic, and subsequently forwards the to-be-forwarded traffic at reduced power consumption. If it is determined, based on the sampled traffic, that the plurality of AI chips have just switched from the computing phase to the communication phase, the switch chip increases the power consumption for the to-be-forwarded traffic, and subsequently forwards the to-be-forwarded traffic at increased power consumption.

It can be learned from the foregoing method that the switch chip has a power consumption adjustment capability, and can accurately identify, based on forwarded traffic, a change in phases of the AI chips, and adaptively adjust the power consumption for traffic transmission based on the change. It can be learned that, when the AI chips are in the communication phase, the switch chip may forward traffic between the AI chips in a high power consumption state, and when the AI chips are in the computing phase, the switch chip may forward traffic between the AI chips in a low power consumption state. In this way, the power consumption of the switch chip can match an actual workload, thereby avoiding inflated power consumption of the switch chip and achieving power consumption optimization.

In a possible implementation, the training process includes a plurality of sampling intervals, the plurality of sampling intervals include a current sampling interval, the sampled traffic is traffic sampled in the current sampling interval, and that the switch chip detects, based on the sampled traffic, whether the plurality of AI chips have switched between the computing phase and the communication phase includes: The switch chip detects, based on traffic sampled in a previous sampling interval and the traffic sampled in the current sampling interval, whether the plurality of AI chips have switched between the computing phase and the communication phase. In the foregoing implementation, the entire training process may be divided into a plurality of statistical periods, and each statistical period may include a plurality of sampling intervals. Assuming that the current sampling interval in a current statistical period is reached, the switch chip may sample, in the current sampling interval, traffic that is being transmitted by the switch chip, to obtain the traffic sampled in the current sampling interval. Because the traffic sampled in the previous sampling interval is known, the switch chip may compare the traffic sampled in the previous sampling interval with the traffic sampled in the current sampling interval, to accurately determine whether the plurality of AI chips have switched between the computing phase and the communication phase.

In a possible implementation, if the plurality of AI chips have switched from the communication phase to the computing phase, that the switch chip reduces the power consumption for the to-be-forwarded traffic includes: If the traffic sampled in the previous sampling interval is less than the traffic sampled in the current sampling interval, the switch chip determines that the plurality of AI chips have switched from the communication phase to the computing phase, and reduces the power consumption for the to-be-forwarded traffic. In the foregoing process, if the traffic sampled in the previous sampling interval is less than the traffic sampled in the current sampling interval to some extent, the switch chip determines that the plurality of AI chips have just switched from the communication phase to the computing phase. In this case, the switch chip reduces the power consumption for the to-be-forwarded traffic, and subsequently forwards the to-be-forwarded traffic at reduced power consumption.

In a possible implementation, if the plurality of AI chips have switched from the computing phase to the communication phase, that the switch chip increases the power consumption for the to-be-forwarded traffic includes: If the traffic sampled in the previous sampling interval is greater than the traffic sampled in the current sampling interval, the switch chip determines that the plurality of AI chips have switched from the computing phase to the communication phase, and increases the power consumption for the to-be-forwarded traffic. In the foregoing process, if the traffic sampled in the previous sampling interval is greater than the traffic sampled in the current sampling interval to some extent, the switch chip determines that the plurality of AI chips have just switched from the computing phase to the communication phase. In this case, the switch chip increases the power consumption for the to-be-forwarded traffic, and subsequently forwards the to-be-forwarded traffic at increased power consumption.

In a possible implementation, that the switch chip reduces the power consumption for the to-be-forwarded traffic includes: The switch chip performs at least one of the following: reducing an operating frequency of the switch chip stepwise, reducing an operating voltage of the switch chip stepwise, and disabling a serializer/deserializer (serializer/deserializer, SerDes) of the switch chip, where a priority of reducing the operating frequency of the switch chip stepwise is higher than a priority of reducing the operating voltage of the switch chip stepwise, and the priority of reducing the operating voltage of the switch chip stepwise is higher than a priority of disabling the SerDes of the switch chip. In the foregoing implementation, when the switch chip needs to reduce the power consumption for subsequent traffic, the switch chip may reduce the operating frequency, reduce the operating voltage, and disable the SerDes. Because the solution of incrementally reducing the operating frequency, incrementally reducing the operating voltage, and disabling a part of SerDes is used by the switch chip in this process, when the plurality of AI chips have switched from the communication phase to the computing phase, the switch chip can smoothly adjust the power consumption, and traffic between the AI chips that is forwarded by the switch chip decreases continuously and transitions smoothly.

In a possible implementation, that the switch chip increases the power consumption for the to-be-forwarded traffic includes: The switch chip performs at least one of the following at a moment when the to-be-forwarded traffic arrives: increasing the operating frequency of the switch chip, increasing the operating voltage of the switch chip, and enabling the SerDes of the switch chip; or the switch chip performs at least one of the following at a target moment: increasing the operating frequency of the switch chip, increasing the operating voltage of the switch chip, and enabling the SerDes of the switch chip, where the target moment is earlier than the moment when the to-be-forwarded traffic arrives. In the foregoing implementation, when the switch chip needs to increase the power consumption for the subsequent traffic, the switch chip may enable the SerDes, increase the operating voltage, and increase the operating frequency. Because the switch chip may choose, based on an actual situation, to increase the power consumption in real time (that is, increase the power consumption at a moment when the subsequent traffic arrives) or increase the power consumption in advance (that is, increase the power consumption at a target moment) in this process, impact of a long reset (startup) time of the SerDes in the switch chip on communication between AI chips can be avoided.

In a possible implementation, the training process includes a plurality of statistical periods, the plurality of statistical periods include a previous statistical period and a current statistical period, the current statistical period includes a previous sampling interval and a current sampling interval, and that the switch chip performs at least one of the following at the moment when the to-be-forwarded traffic arrives: increasing the operating frequency of the switch chip, increasing the operating voltage of the switch chip, and enabling the SerDes of the switch chip includes: If average duration for which the plurality of AI chips are in the communication phase in the previous statistical period is zero, the switch chip performs at least one of the following at the moment when the to-be-forwarded traffic arrives: increasing the operating frequency of the switch chip, increasing the operating voltage of the switch chip, and enabling the SerDes of the switch chip; or if the average duration for which the plurality of AI chips are in the communication phase in the previous statistical period and average duration for which the plurality of AI chips are in the computing phase in the previous statistical period are both non-zero, and a standard deviation of duration for which the plurality of AI chips are in the communication phase in the previous statistical period is greater than or equal to a preset first threshold, the switch chip performs at least one of the following at the moment when the to-be-forwarded traffic arrives: increasing the operating frequency of the switch chip, increasing the operating voltage of the switch chip, and enabling the SerDes of the switch chip; or if the average duration for which the plurality of AI chips are in the communication phase in the previous statistical period and the average duration for which the plurality of AI chips are in the computing phase in the previous statistical period are both non-zero, and standard deviation of duration for which the plurality of AI chips are in the computing phase in the previous statistical period is greater than or equal to a preset second threshold, the switch chip performs at least one of the following at the moment when the to-be-forwarded traffic arrives: increasing the operating frequency of the switch chip, increasing the operating voltage of the switch chip, and enabling the SerDes of the switch chip. In the foregoing process, the plurality of statistical periods further include the previous statistical period. The switch chip may obtain, in the previous statistical period, traffic characteristic parameters for generating a power consumption adjustment policy for the current statistical period, for example, in the previous statistical period, the average duration for which the plurality of AI chips are in the communication phase, the average duration for which the plurality of AI chips are in the computing phase, the standard deviation of the duration for which the plurality of AI chips are in the communication phase, and the standard deviation of the duration for which the plurality of AI chips are in the computing phase. In this case, in the current statistical phase, when the switch chip needs to increase the power consumption, the switch chip may determine, based on these traffic characteristic parameters, whether a current traffic waveform conforms to a typical AI traffic model. If it is determined, based on these traffic characteristic parameters, that the current traffic waveform does not conform to the typical AI traffic model, the switch chip chooses to increase the power consumption in real time to increase the power consumption.

In a possible implementation, that the switch chip performs at least one of the following at the target moment: increasing the operating frequency of the switch chip, increasing the operating voltage of the switch chip, and enabling the SerDes of the switch chip includes: If the average duration for which the plurality of AI chips are in the communication phase in the previous statistical period and the average duration for which the plurality of AI chips are in the computing phase in the previous statistical period are both non-zero, the standard deviation of the duration for which the plurality of AI chips are in the communication phase in the previous statistical period is less than a preset first threshold, and the standard deviation of the duration for which the plurality of AI chips are in the computing phase in the previous statistical period is less than a preset second threshold, the switch chip performs at least one of the following at the target moment: increasing the operating frequency of the switch chip, increasing the operating voltage of the switch chip, and enabling the SerDes of the switch chip. In the foregoing implementation, if it is determined, based on these traffic characteristic parameters, that the current traffic waveform conforms to the typical AI traffic model, the switch chip chooses to increase the power consumption by increasing the power consumption in advance, thereby avoiding impact of a long reset (startup) time of the SerDes in the switch chip on communication between AI chips.

In a possible implementation, the average duration for which the plurality of AI chips are in the communication phase in the previous statistical period is calculated based on a quantity of times the plurality of AI chips are in the communication phase in the previous statistical period and duration of each time the plurality of AI chips are in the communication phase in the previous statistical period. The average duration for which the plurality of AI chips are in the computing phase in the previous statistical period is calculated based on a quantity of times the plurality of AI chips are in the computing phase in the previous statistical period and duration of each time the plurality of AI chips are in the computing phase in the previous statistical period. The standard deviation of the duration for which the plurality of AI chips are in the communication phase in the previous statistical period is calculated based on the average duration for which the plurality of AI chips are in the communication phase in the previous statistical period and the duration of each time the plurality of AI chips are in the communication phase in the previous statistical period. The standard deviation of the duration for which the plurality of AI chips are in the computing phase in the previous statistical period is calculated based on the average duration for which the plurality of AI chips are in the computing phase in the previous statistical period and the duration of each time the plurality of AI chips are in the computing phase in the previous statistical period. In the foregoing implementation, the switch chip may sample, in the plurality of sampling intervals in the previous statistical period, traffic that is being transmitted by the switch chip, and determine, based on the traffic sampled in the plurality of sampling intervals, the quantity of times the plurality of AI chips are in the communication phase, the quantity of times the plurality of AI chips are in the computing phase, the duration of each time the plurality of AI chips are in the communication phase, and the duration of each time the plurality of AI chips are in the computing phase in the previous statistical period, to calculate, based on these traffic characteristic parameters, the average duration for which the plurality of AI chips are in the communication phase, the average duration for which the plurality of AI chips are in the computing phase, the standard deviation of the duration for which the plurality of AI chips are in the communication phase, and the standard deviation of the duration for which the plurality of AI chips are in the computing phase in the previous statistical period.

In a possible implementation, a difference between the target moment and the moment when the to-be-forwarded traffic arrives is calculated based on the average duration for which the plurality of AI chips are in the computing phase in the previous statistical period and the standard deviation of the duration for which the plurality of AI chips are in the computing phase in the previous statistical period.

A second aspect of embodiments of this application provides a switch chip. The switch chip is configured to forward traffic between a plurality of AI chips, the plurality of AI chips are configured to train a neural network, and in a training process of the neural network, the plurality of AI chips are in a computing phase or a communication phase. The switch chip includes: a sampling module, configured to sample the traffic forwarded by the switch chip, to obtain sampled traffic; a detection module, configured to detect, based on the sampled traffic, whether the plurality of AI chips have switched between the computing phase and the communication phase; and a first adjustment module, configured to: if the plurality of AI chips have switched from the communication phase to the computing phase, reduce power consumption for to-be-forwarded traffic; or a second adjustment module, configured to: if the plurality of AI chips have switched from the computing phase to the communication phase, increase the power consumption for the to-be-forwarded traffic.

In a possible implementation, the training process includes a plurality of sampling intervals, the plurality of sampling intervals include a current sampling interval, the sampled traffic is traffic sampled in the current sampling interval, and the detection module is configured to detect, based on traffic sampled in a previous sampling interval and the traffic sampled in the current sampling interval, whether the plurality of AI chips have switched between the computing phase and the communication phase.

In a possible implementation, the first adjustment module is configured to: if the traffic sampled in the previous sampling interval is less than the traffic sampled in the current sampling interval, determine that the plurality of AI chips have switched from the communication phase to the computing phase; and reduce the power consumption for the to-be-forwarded traffic.

In a possible implementation, the second adjustment module is configured to: if the traffic sampled in the previous sampling interval is greater than the traffic sampled in the current sampling interval, determine that the plurality of AI chips have switched from the computing phase to the communication phase; and increase the power consumption for the to-be-forwarded traffic.

In a possible implementation, the first adjustment module is configured to perform at least one of the following: reducing an operating frequency of the switch chip stepwise, reducing an operating voltage of the switch chip stepwise, and disabling a serializer/deserializer SerDes of the switch chip, where a priority of reducing the operating frequency of the switch chip stepwise is higher than a priority of reducing the operating voltage of the switch chip stepwise, and the priority of reducing the operating voltage of the switch chip stepwise is higher than a priority of disabling the SerDes of the switch chip.

In a possible implementation, the second adjustment module is configured to: perform at least one of the following at a moment when the to-be-forwarded traffic arrives: increasing the operating frequency of the switch chip, increasing the operating voltage of the switch chip, and enabling the SerDes of the switch chip; or perform at least one of the following at a target moment: increasing the operating frequency of the switch chip, increasing the operating voltage of the switch chip, and enabling the SerDes of the switch chip, where the target moment is earlier than the moment when the to-be-forwarded traffic arrives.

In a possible implementation, the training process includes a plurality of statistical periods, the plurality of statistical periods include a previous statistical period and a current statistical period, the current statistical period includes the previous sampling interval and the current sampling interval, and the second adjustment module is configured to: if average duration for which the plurality of AI chips are in the communication phase in the previous statistical period is zero, perform at least one of the following at the moment when the to-be-forwarded traffic arrives: increasing the operating frequency of the switch chip, increasing the operating voltage of the switch chip, and enabling the SerDes of the switch chip; or if the average duration for which the plurality of AI chips are in the communication phase in the previous statistical period and average duration for which the plurality of AI chips are in the computing phase in the previous statistical period are both non-zero, and a standard deviation of duration for which the plurality of AI chips are in the communication phase in the previous statistical period is greater than or equal to a preset first threshold, perform at least one of the following at the moment when the to-be-forwarded traffic arrives: increasing the operating frequency of the switch chip, increasing the operating voltage of the switch chip, and enabling the SerDes of the switch chip; or if the average duration for which the plurality of AI chips are in the communication phase in the previous statistical period and the average duration for which the plurality of AI chips are in the computing phase in the previous statistical period are both non-zero, and a standard deviation of duration for which the plurality of AI chips are in the computing phase in the previous statistical period is greater than or equal to a preset second threshold, perform at least one of the following at the moment when the to-be-forwarded traffic arrives: increasing the operating frequency of the switch chip, increasing the operating voltage of the switch chip, and enabling the SerDes of the switch chip.

In a possible implementation, the second adjustment module is configured to: if the average duration for which the plurality of AI chips are in the communication phase in the previous statistical period and the average duration for which the plurality of AI chips are in the computing phase in the previous statistical period are both non-zero, the standard deviation of the duration for which the plurality of AI chips are in the communication phase in the previous statistical period is less than the preset first threshold, and the standard deviation of the duration for which the plurality of AI chips are in the computing phase in the previous statistical period is less than the preset second threshold, perform at least one of the following at the target moment: increasing the operating frequency of the switch chip, increasing the operating voltage of the switch chip, and enabling the SerDes of the switch chip.

In a possible implementation, the average duration for which the plurality of AI chips are in the communication phase in the previous statistical period is calculated based on a quantity of times the plurality of AI chips are in the communication phase in the previous statistical period and duration of each time the plurality of AI chips are in the communication phase in the previous statistical period. The average duration for which the plurality of AI chips are in the computing phase in the previous statistical period is calculated based on a quantity of times the plurality of AI chips are in the computing phase in the previous statistical period and duration of each time the plurality of AI chips are in the computing phase in the previous statistical period. The standard deviation of the duration for which the plurality of AI chips are in the communication phase in the previous statistical period is calculated based on the average duration for which the plurality of AI chips are in the communication phase in the previous statistical period and the duration of each time the plurality of AI chips are in the communication phase in the previous statistical period. The standard deviation of the duration for which the plurality of AI chips are in the computing phase in the previous statistical period is calculated based on the average duration for which the plurality of AI chips are in the computing phase in the previous statistical period and the duration of each time the plurality of AI chips are in the computing phase in the previous statistical period.

In a possible implementation, a difference between the target moment and the moment when the to-be-forwarded traffic arrives is calculated based on the average duration for which the plurality of AI chips are in the computing phase in the previous statistical period and the standard deviation of the duration for which the plurality of AI chips are in the computing phase in the previous statistical period.

A third aspect of embodiments of this application provides an interconnection apparatus. The apparatus includes a memory and a processor. The memory stores code, the processor is configured to execute the code, and when the code is executed, the apparatus performs the method according to any one of the first aspect or the possible implementations of the first aspect.

A fourth aspect of embodiments of this application provides a computer storage medium. The computer storage medium stores one or more instructions, and when the instructions are executed by one or more computers, the one or more computers are caused to perform the method according to any one of the first aspect or the possible implementations of the first aspect.

A fifth aspect of embodiments of this application provides a computer program product. The computer program product stores instructions, and when the instructions are executed by a computer, the computer is caused to perform the method according to any one of the first aspect or the possible implementations of the first aspect.

In this embodiment of this application, a switch chip may be configured to perform traffic transmission between a plurality of AI chips, the plurality of AI chips may be configured to train a neural network model, and in a training process, the plurality of AI chips may switch back and forth between a computing phase and a communication phase. In an operating process of the switch chip, the switch chip may sample traffic that is being forwarded by the switch chip, to obtain sampled traffic. Then, the switch chip may detect, based on the sampled traffic, whether the plurality of AI chips have switched between the computing phase and the communication phase, to determine whether to adjust subsequent power consumption for to-be-forwarded traffic. If the plurality of AI chips have switched from the communication phase to the computing phase, the switch chip may reduce the power consumption for the to-be-forwarded traffic, and forward the to-be-forwarded traffic at reduced power consumption. If the plurality of AI chips have switched from the computing phase to the communication phase, the switch chip may increase the power consumption for the to-be-forwarded traffic, and forward the to-be-forwarded traffic at increased power consumption. In the foregoing process, the switch chip has a power consumption adjustment capability, and can accurately identify, based on forwarded traffic, a change in phases of the AI chips, and adaptively adjust the power consumption for traffic transmission based on the change. It can be learned that, when the AI chips are in the communication phase, the switch chip may forward traffic between the AI chips in a high power consumption state, and when the AI chips are in the computing phase, the switch chip may forward traffic between the AI chips in a low power consumption state. In this way, the power consumption of the switch chip can match an actual workload, thereby avoiding inflated power consumption of the switch chip and achieving power consumption optimization.

### BRIEF DESCRIPTION OF DRAWINGS

FIG. 1 is a diagram of a structure of a training cluster according to an embodiment of this application;
FIG. 2 is a diagram of an AI traffic model according to an embodiment of this application;
FIG. 3 is a diagram of a structure of a switch chip according to an embodiment of this application;
FIG. 4 is a schematic flowchart of a power consumption optimization method for a switch chip according to an embodiment of this application;
FIG. 5 is a diagram of a statistical period and a sampling interval according to an embodiment of this application;
FIG. 6 is another schematic flowchart of a power consumption optimization method for a switch chip according to an embodiment of this application;
FIG. 7 is another diagram of a statistical period and sampling intervals according to an embodiment of this application;
FIG. 8 is a diagram of a structure of a switch chip according to an embodiment of this application; and
FIG. 9 is a diagram of a structure of a chip according to an embodiment of this application.

### DESCRIPTION OF EMBODIMENTS

Embodiments of this application provide a power consumption optimization method for a switch chip, and a related device, to make power consumption of the switch chip match an actual workload, thereby avoiding inflated power consumption of the switch chip and achieving power consumption optimization.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

With increasing adoption of AI training clusters, to improve training efficiency of an AI training cluster for a neural network model, an interconnection infrastructure device with an ultra-high bandwidth may be introduced into the AI training cluster. The device serves as an interconnection node to connect a plurality of computing nodes in the cluster, thereby reducing communication latency between the computing nodes and improving training efficiency of the AI training cluster.

An AI training cluster provided in related technologies may include a plurality of computing nodes and interconnection nodes. The plurality of computing nodes may be embodied as a plurality of AI chips, and the interconnection node may be embodied as a switch chip. A receive end of the switch chip is connected to a part of the AI chips, and a transmit end of the switch chip is connected to another part of the AI chips. Model training performed by the plurality of AI chips includes a plurality of iterations, and each iteration includes a computing phase and a communication phase. In the computing phase, communication traffic between the AI chips is close to zero. In this case, traffic between the AI chips that needs to be forwarded by the switch chip is nearly zero. In the communication phase, communication traffic between the AI chips is very large. In this case, a large amount of traffic between the AI chips needs to be forwarded by the switch chip. Because the switch chip has an ultra-high bandwidth, the switch chip can successfully forward a large amount of traffic from some AI chips to some other AI chips, to ensure normal communication between the AI chips.

However, to ensure communication quality between the AI chips, the switch chip often needs to remain in a full-load operating state continuously. In the communication phase, an amount of traffic that the switch chip needs to forward is large, and the power consumption of the switch chip can match an actual traffic forwarding requirement. However, in the computing phase, an amount of traffic that the switch chip needs to forward is very small, and the power consumption of the switch chip is far greater than an actual traffic forwarding requirement, resulting in inflated power consumption of the switch chip.

To resolve the foregoing problem, an embodiment of this application provides a power consumption optimization method for a switch chip, and the method may be implemented in combination with an artificial intelligence (artificial intelligence, AI) technology. The AI technology is a technical discipline for using digital computers or digital computer-controlled machines to simulate, extend, and expand human intelligence. The AI technology obtains best results by perceiving environments, acquiring knowledge, and using the knowledge. In other words, the artificial intelligence technology is a branch of computer science, and attempts to understand essence of intelligence and develop a new type of intelligent machine that can react in a manner similar to human intelligence. Using artificial intelligence for data processing is a common application of artificial intelligence.

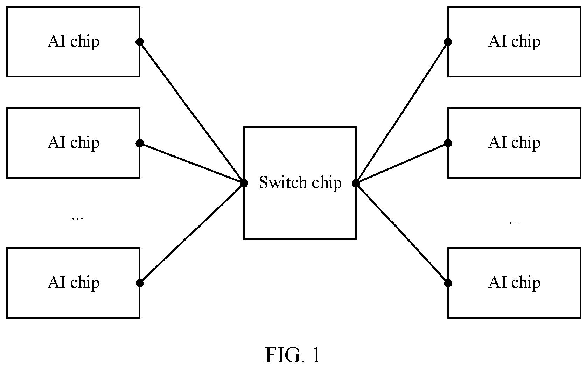

In actual application, the AI technology may complete a task of a user by using a neural network model, to meet a requirement of the user. For example, an image from a user may be input into a neural network model to determine a category of the image. For another example, voice from a user may be input into a neural network model, to obtain a corresponding text. For another example, a question from a user may be input into a neural network model, to obtain a corresponding answer. The neural network models in these actual application scenarios are all trained neural network models. To complete training of these models, training clusters may be used for implementation. FIG. 1 is a diagram of a structure of a training cluster according to an embodiment of this application. As shown in FIG. 1, the training cluster includes a switch chip and a plurality of AI chips. The following separately describes the AI chip and the switch chip.

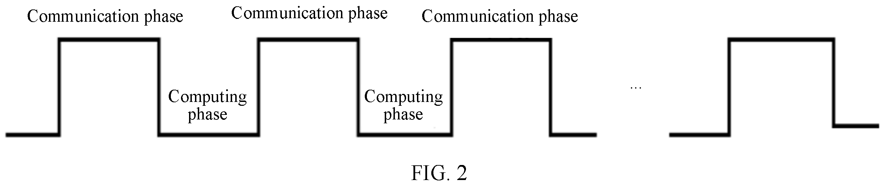

An AI chip may be presented in a plurality of forms. For example, the AI chip may be a central processing unit (central processing unit, CPU). For another example, the AI chip may be a graphics processing unit (graphics processing unit, GPU). For another example, the AI chip may be a neural processing unit (neural processing unit, NPU). For another example, the AI chip may be a tensor processing unit (tensor processing unit, TPU). In the training cluster, the plurality of AI chips may be configured to jointly implement AI training. In other words, the plurality of AI chips may jointly train a neural network model. A training process of the neural network model may include a plurality of iterations, and each iteration includes a computing phase and a communication phase. When the plurality of AI chips are in the computing phase, communication traffic between the plurality of AI chips is very small, and traffic between the plurality of AI chips is close to zero. When the plurality of AI chips are in the communication phase, communication traffic between the plurality of AI chips is very large, and traffic between the plurality of AI chips is far greater than zero. It can be learned that in an entire training process, the plurality of AI chips are either in the computing phase or in the communication phase. Therefore, the plurality of AI chips continuously switch between the computing phase and the communication phase. In different computing phases, traffic that needs to be transmitted between the plurality of AI chips is very close. Similarly, in different communication phases, traffic that needs to be transmitted between the plurality of AI chips is also very close. Therefore, in an entire training process, traffic that needs to be transmitted between the plurality of AI chips may exhibit a typical square-wave pattern, which may also be referred to as an AI traffic model, as shown in FIG. 2 (where FIG. 2 is a diagram of an AI traffic model according to an embodiment of this application).

The switch chip may be connected to the plurality of AI chips. Generally, a receive end of the switch chip is connected to a part of the plurality of AI chips, and a transmit end of the switch chip is connected to another part of the plurality of AI chips. Therefore, the switch chip may be configured to forward traffic (for example, received packets (received packets), received bytes (received bytes), transmitted packets (transmitted packets), and transmitted bytes (transmitted bytes)) between the plurality of AI chips. In other words, the switch chip may forward traffic from the part of AI chips located on a receive end side to the part of AI chips located on a transmit end side. In different computing phases, an amount of traffic to be sent from the AI chips on the receive end side to the AI chips on the transmit end side are close to each other and are small. In different communication phases, an amount of traffic to be sent from the AI chips on the receive end side to the AI chips on the transmit end side is close to each other and are large. Therefore, if the switch chip remains in a high-load operating state continuously, power consumption of the switch chip is extremely high. To optimize the power consumption of the switch chip, the switch chip may be improved, so that the switch chip can adjust the power consumption of the switch chip based on phases of the plurality of chips.

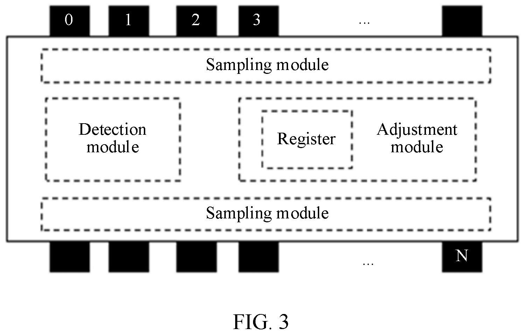

As shown in FIG. 3 (where FIG. 3 is a diagram of a structure of a switch chip according to an embodiment of this application), the switch chip provided in this embodiment of this application includes a sampling module, a detection module, and an adjustment module. The sampling module may also be referred to as a port monitoring circuit. The sampling module is connected to a port of a receive end and a port of a transmit end, and may sample, in real time, traffic forwarded by the switch chip (for example, traffic forwarded by the switch chip during a time period), to obtain sampled traffic. The detection module may detect, based on the sampled traffic, whether the plurality of AI chips have switched between a computing phase and a communication phase, and notify the adjustment module of a detection result. The adjustment module includes a configuration register that stores various traffic characteristic parameters (where these traffic characteristic parameters are usually calculated based on the previously sampled traffic and are stored in the register). These traffic characteristic parameters may be used as a current power consumption adjustment policy. If the detection result indicates that the plurality of AI chips have switched from the communication phase to the computing phase, the adjustment module reduces power consumption for to-be-transmitted traffic according to the power consumption adjustment policy. If the detection result indicates that the plurality of AI chips have switched from the computing phase to the communication phase, the adjustment module increases the power consumption for the to-be-transmitted traffic according to the power consumption adjustment policy. It can be learned that the switch chip may autonomously adjust, based on a change in a phase of the plurality of AI chips, the power consumption of the switch chip for forwarding traffic, thereby optimizing performance of the switch chip.

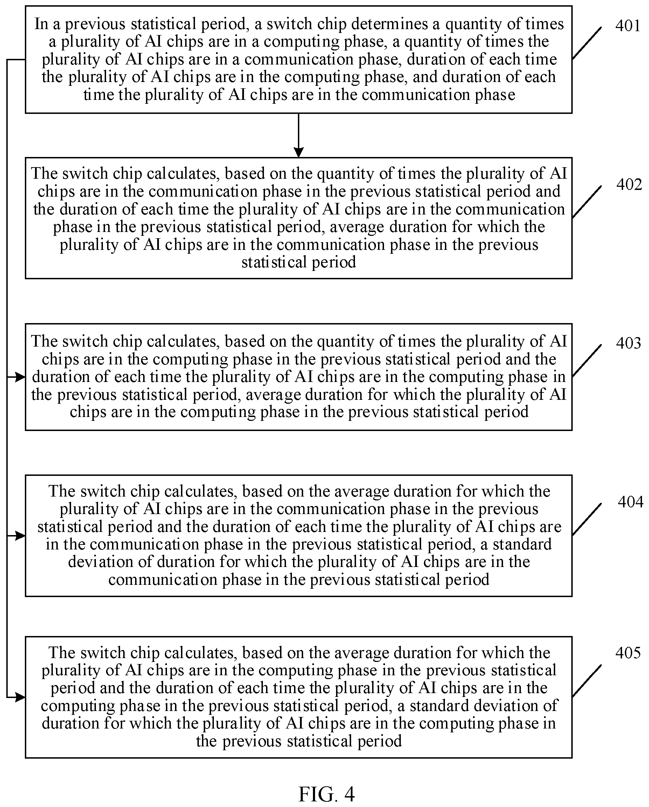

To further understand a power consumption adjustment process of the switch chip, the following further describes the process with reference to a specific embodiment. It should be noted that the switch chip may divide an entire training process into a plurality of statistical periods (where duration of each statistical period is fixed, and the duration may be set based on an actual requirement, and this is not limited herein), and each statistical period includes a plurality of sampling intervals (where duration of each sampling interval is fixed, and the duration may be set based on an actual requirement, and this is not limited herein). Because operations performed by the switch chip in each statistical period are similar, the following describes any one of the plurality of statistical periods, and regards the statistical period as a current statistical period. Because a current power consumption adjustment policy applied by the switch chip in the current statistical period is generated based on a plurality of parameters calculated by the switch chip in a previous statistical period, the following first describes operations performed by the switch chip in the previous statistical period. FIG. 4 is a schematic flowchart of a power consumption optimization method for a switch chip according to an embodiment of this application. As shown in FIG. 4, the method includes the following steps.

401: In a previous statistical period, the switch chip determines a quantity of times a plurality of AI chips are in a computing phase, a quantity of times the plurality of AI chips are in a communication phase, duration of each time the plurality of AI chips are in the computing phase, and duration of each time the plurality of AI chips are in the communication phase.

In this embodiment, after the previous statistical period begins, because the previous statistical period may include a plurality of sampling intervals, the switch chip may sample traffic forwarded by the switch chip in each sampling interval, to obtain traffic sampled by the switch chip in each sampling interval. In this case, based on traffic sampled by the switch chip in the plurality of sampling intervals in the previous statistical period, the switch chip may perform the following operations.

If traffic sampled by the switch chip in each of several consecutive sampling intervals is less than a preset traffic threshold (where a value of the threshold may be set based on an actual requirement, and is not limited herein), it may be considered that the switch chip forwards a small amount of traffic (which is typically close to zero) between the plurality of AI chips in each of the several consecutive sampling intervals. Accordingly, the switch chip may determine that the plurality of AI chips are in one computing phase, and calculate, based on a quantity of the several consecutive sampling intervals and duration of one sampling interval, duration of one computing phase of the plurality of AI chips.

If the traffic sampled by the switch chip in each of the several consecutive sampling intervals is greater than or equal to the preset traffic threshold, it may be considered that the switch chip forwards a large amount of traffic between the plurality of AI chips in each of the several consecutive sampling intervals. Accordingly, the switch chip may determine that the plurality of AI chips are in one communication phase, and calculate, based on the quantity of the several consecutive sampling intervals and the duration of one sampling interval, duration of one communication phase of the plurality of AI chips.

The foregoing operations are repeatedly performed until the previous statistical period ends. In this way, the switch chip may determine the quantity of times the plurality of AI chips are in the computing phase, the quantity of times the plurality of AI chips are in the communication phase, the duration of each time the plurality of AI chips are in the computing phase, and the duration of each time the plurality of AI chips are in the communication phase in the previous statistical period.

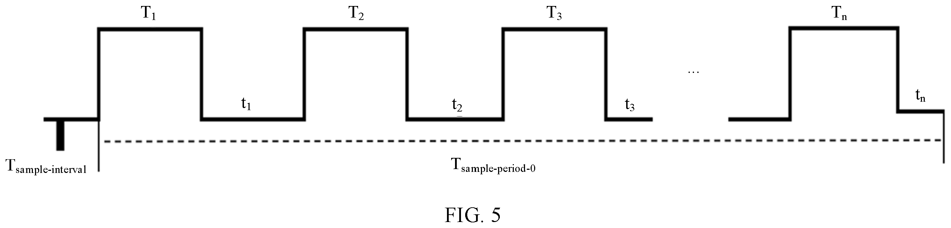

For example, as shown in FIG. 5 (where FIG. 5 is a diagram of a statistical period and a sampling interval according to an embodiment of this application), it is assumed that the statistical period is T_{sample-period}, the sampling interval is Tₛₐₘₚₗₑ₋ᵢₙₜₑᵣᵥₐₗ, and one T_{sample-period} may be divided into a plurality of sample intervals Tₛₐₘₚₗₑ₋ᵢₙₜₑᵣᵥₐₗ. It is assumed that a previous statistical period is T_{sample-period-0}. In T_{sample-period-0}, the switch chip samples forwarded traffic in each Tₛₐₘₚₗₑ₋ᵢₙₜₑᵣᵥₐₗ, to obtain traffic sampled in each Tₛₐₘₚₗₑ₋ᵢₙₜₑᵣᵥₐₗ. The switch chip may make the following judgments.

If an amount of traffic sampled in several consecutive Tₛₐₘₚₗₑ₋ᵢₙₜₑᵣᵥₐₗ is large, the switch chip may record this as the plurality of AI chips being in one communication phase, and multiply a quantity of the several Tₛₐₘₚₗₑ₋ᵢₙₜₑᵣᵥₐₗ by duration of Tₛₐₘₚₗₑ₋ᵢₙₜₑᵣᵥₐₗ, to obtain duration Tᵢ of one communication phase of the plurality of AI chips.

If the amount of the traffic sampled in the several consecutive Tₛₐₘₚₗₑ₋ᵢₙₜₑᵣᵥₐₗ is close to zero, the switch chip may record this as the plurality of AI chips being in one computing phase, and multiply the quantity of the several Tₛₐₘₚₗₑ₋ᵢₙₜₑᵣᵥₐₗ by the duration of Tₛₐₘₚₗₑ₋ᵢₙₜₑᵣᵥₐₗ, to obtain duration tᵢ of one computing phase of the plurality of AI chips.

In this case, the switch chip may obtain a quantity n of times the plurality of AI chips are in the communication phase (where n is usually an integer greater than or equal to 2), a quantity m of times the plurality of AI chips are in the computing phase (where m is usually an integer greater than or equal to 2), duration T₁, T₂, ..., Tₙ of each time the plurality of AI chips are in the communication phase, and duration t₁, t₂, ..., tₘ of each time the plurality of AI chips are in the computing phase in T_{sample-period-0},.

402: The switch chip calculates, based on the quantity of times the plurality of AI chips are in the communication phase in the previous statistical period and the duration of each time the plurality of AI chips are in the communication phase in the previous statistical period, average duration for which the plurality of AI chips are in the communication phase in the previous statistical period.

403: The switch chip calculates, based on the quantity of times the plurality of AI chips are in the computing phase in the previous statistical period and the duration of each time the plurality of AI chips are in the computing phase in the previous statistical period, average duration for which the plurality of AI chips are in the computing phase in the previous statistical period.

404: The switch chip calculates, based on the average duration for which the plurality of AI chips are in the communication phase in the previous statistical period and the duration of each time the plurality of AI chips are in the communication phase in the previous statistical period, a standard deviation of duration for which the plurality of AI chips are in the communication phase in the previous statistical period.

405: The switch chip calculates, based on the average duration for which the plurality of AI chips are in the computing phase in the previous statistical period and the duration of each time the plurality of AI chips are in the computing phase in the previous statistical period, a standard deviation of duration for which the plurality of AI chips are in the computing phase in the previous statistical period.

After obtaining the quantity of times the plurality of AI chips are in the computing phase in the previous statistical period, the quantity of times the plurality of AI chips are in the communication phase in the previous statistical period, the duration of each time the plurality of AI chips are in the computing phase in the previous statistical period, and the duration of each time the plurality of AI chips are in the communication phase in the previous statistical period, the switch chip may determine whether the quantity of times the plurality of AI chips are in the computing phase in the previous statistical period is close to the quantity of times the plurality of AI chips are in the communication phase in the previous statistical period. If the two quantities are close (for example, if the two quantities are equal or differ from each other by one), the switch chip may perform the following calculation, to obtain corresponding traffic characteristic parameters.

In the previous statistical period, the switch chip may perform an averaging operation based on the quantity of times the plurality of AI chips are in the communication phase and the duration of each time the plurality of AI chips are in the communication phase, to obtain the average duration for which the plurality of AI chips are in the communication phase. Similarly, the switch chip may perform an averaging operation based on the quantity of times the plurality of AI chips are in the computing phase and the duration of each time the plurality of AI chips are in the computing phase, to obtain the average duration for which the plurality of AI chips are in the computing phase.

In addition, the switch chip may calculate, based on the average duration for which the plurality of AI chips are in the communication phase, the quantity of times the plurality of AI chips are in the communication phase, and the duration of each time the plurality of AI chips are in the communication phase, the standard deviation of the duration for which the plurality of AI chips are in the communication phase. Similarly, the switch chip may calculate, based on the average duration for which the plurality of AI chips are in the computing phase, the quantity of times the plurality of AI chips are in the computing phase, and the duration of each time the plurality of AI chips are in the computing phase, the standard deviation of the duration for which the plurality of AI chips are in the computing phase. After obtaining these traffic characteristic parameters, the switch chip may store these traffic characteristic parameters in a register, so that the traffic characteristic parameters can be used as a power consumption adjustment policy of the switch chip in a current statistical period.

As in the foregoing example, after obtaining the quantity n of times the plurality of AI chips are in the communication phase and the quantity m of times the plurality of AI chips are in the computing phase in T_{sample-period-0}, the switch chip may determine whether n is close to m. If n is close to m, the switch chip may calculate, based on the following formula, the average duration for which the plurality of AI chips are in the communication phase in T_{sample-period-0}: ${T}_{average} = {\sum }_{i = 1}^{n} {T}_{i}$ (1).

Similarly, the switch chip may further calculate, based on the following formula, the average duration for which the plurality of AI chips are in the computing phase in T_{sample-period-0}: ${t}_{average} = {\sum }_{i = 1}^{m} {t}_{i}$ (2).

In addition, the switch chip may further calculate, based on the following formula, the standard deviation of the duration for which the plurality of AI chips are in the communication phase in T_{sample-period-0}: ${T}_{s tan dard - deviation} = \sqrt{{{\sum }_{i = 1}^{n} \frac{\left({T}_{i}-{T}_{average}\right)}{n - 1}}^{2}}$ (3).

Similarly, the switch chip may further calculate, based on the following formula, the standard deviation of the duration for which the plurality of AI chips are in the computing phase in T_{sample-period-0}: ${T}_{s tan dard - deviation} = \sqrt{{{\sum }_{i = 1}^{m} \frac{\left({t}_{i}-{t}_{average}\right)}{m - 1}}^{2}}$ (4).

After obtaining these traffic characteristic parameters, the switch chip may store these traffic characteristic parameters in a register, so that the traffic characteristic parameters can be used as a power consumption adjustment policy in T_{sample-period-1}.

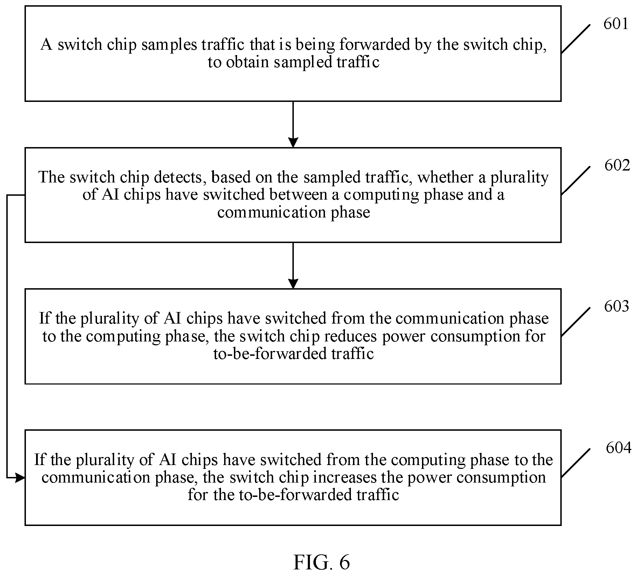

The following describes operations performed by the switch chip in the current statistical period. FIG. 6 is another schematic flowchart of a power consumption optimization method for a switch chip according to an embodiment of this application. As shown in FIG. 6, the method includes the following steps.

601: The switch chip samples traffic forwarded by the switch chip, to obtain sampled traffic.

In this embodiment, after a current statistical period begins, the switch chip may sample traffic forwarded by the switch chip, to obtain sampled traffic. It should be noted that the current statistical period may include a plurality of sampling intervals. Because operations performed by the switch chip in each sampling interval of the current statistical period are similar, the following uses any of the sampling intervals in the current statistical period as an example for description, and the sampling interval is referred to as a current sampling interval. In this case, the switch chip may sample, in the current sampling interval, traffic that is being forwarded by the switch chip, to obtain traffic sampled in the current sampling interval.

602: The switch chip detects, based on the sampled traffic, whether a plurality of AI chips have switched between a computing phase and a communication phase.

603: If the plurality of AI chips have switched from the communication phase to the computing phase, the switch chip reduces power consumption for to-be-forwarded traffic.

604: If the plurality of AI chips have switched from the computing phase to the communication phase, the switch chip increases the power consumption for the to-be-forwarded traffic.

After obtaining the sampled traffic, the switch chip may detect, based on the sampled traffic, whether the plurality of AI chips have switched between the computing phase and the communication phase, to determine whether to adjust the power consumption for the to-be-forwarded traffic.

If it is determined, based on the sampled traffic, that the plurality of AI chips have not switched between the computing phase and the communication phase, that is, the plurality of AI chips remain in the computing phase or the communication phase, the switch chip does not adjust the power consumption for the to-be-forwarded traffic, and subsequently forwards the to-be-forwarded traffic at the current power consumption.

If it is determined, based on the sampled traffic, that the plurality of AI chips have just switched from the communication phase to the computing phase, that is, the plurality of AI chips have entered the computing phase from the communication phase, the switch chip reduces the power consumption for the to-be-forwarded traffic according to a power consumption adjustment policy, and subsequently forwards the to-be-forwarded traffic at reduced power consumption.

If it is determined, based on the sampled traffic, that the plurality of AI chips have just switched from the computing phase to the communication phase, that is, the plurality of AI chips have entered the communication phase from the computing phase, the switch chip increases the power consumption for the to-be-forwarded traffic according to the power consumption adjustment policy, and subsequently forwards the to-be-forwarded traffic at increased power consumption.

Specifically, the switch chip may detect, in the following manner, whether the plurality of AI chips have switched between the computing phase and the communication phase.

After obtaining the traffic sampled in the current sampling interval, because traffic sampled in a previous sampling interval has also been obtained, the switch chip may compare the traffic sampled in the previous sampling interval with the traffic sampled in the current sampling interval, to detect whether the plurality of AI chips have switched between the computing phase and the communication phase.

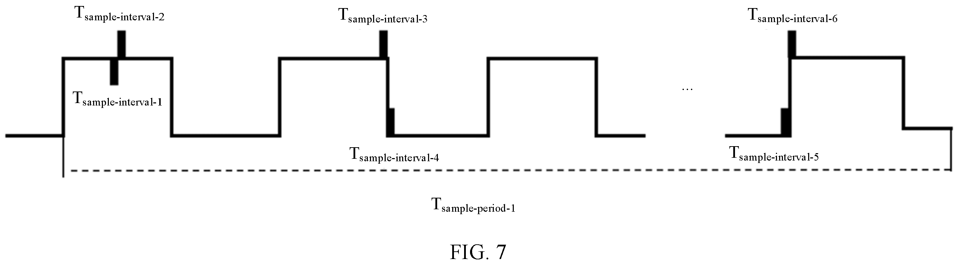

If the traffic sampled in the previous sampling interval is equal to or approximately equal to the traffic sampled in the current sampling interval, the switch chip determines that the plurality of AI chips have not switched between the computing phase and the communication phase, that is, the plurality of AI chips remain in the computing phase or the communication phase. The switch chip does not adjust the power consumption for the to-be-forwarded traffic, and subsequently forwards the to-be-forwarded traffic at the current power consumption. For example, as shown in FIG. 7 (where FIG. 7 is another diagram of a statistical period and sampling intervals according to an embodiment of this application), in T_{sample-period-1}, it is assumed that Tₛₐₘₚₗₑ₋ᵢₙₜₑᵣᵥₐₗ₋₂ is the current sampling interval, and Tₛₐₘₚₗₑ₋ᵢₙₜₑᵣᵥₐₗ₋₁ is the previous sampling interval. Because traffic collected in Tₛₐₘₚₗₑ₋ᵢₙₜₑᵣᵥₐₗ₋₁ is equal to traffic collected in Tₛₐₘₚₗₑ₋ᵢₙₜₑᵣᵥₐₗ₋₂, and an amount of traffic collected in both intervals is large, the switch chip may determine that the plurality of AI chips have not switched between phases and remain in the communication phase, and therefore does not adjust subsequent power consumption for traffic forwarding.

If the traffic sampled in the previous sampling interval is less than the traffic sampled in the current sampling interval to some extent, the switch chip determines that the plurality of AI chips have just switched from the communication phase to the computing phase, that is, the plurality of AI chips have entered the computing phase from the communication phase, the switch chip reduces the power consumption for to-be-forwarded traffic according to a power consumption adjustment policy, and subsequently forwards the to-be-forwarded traffic at reduced power consumption. As in the foregoing example, in T_{sample-period-1}, it is assumed that Tₛₐₘₚₗₑ₋ᵢₙₜₑᵣᵥₐₗ₋₄ is the current sampling interval, and Tₛₐₘₚₗₑ₋ᵢₙₜₑᵣᵥₐₗ₋₃ is the previous sampling interval. Because traffic collected in Tₛₐₘₚₗₑ₋ᵢₙₜₑᵣᵥₐₗ₋₃ is greater than traffic collected in Tₛₐₘₚₗₑ₋ᵢₙₜₑᵣᵥₐₗ₋₄, the switch chip may determine that the plurality of AI chips have entered the computing phase from the communication phase, thereby reducing the subsequent power consumption for forwarding traffic.

If the traffic sampled in the previous sampling interval is greater than the traffic sampled in the current sampling interval to some extent, the switch chip determines that the plurality of AI chips have just switched from the computing phase to the communication phase, that is, the plurality of AI chips have entered the communication phase from the computing phase, the switch chip increases the power consumption for the to-be-forwarded traffic according to the power consumption adjustment policy, and subsequently forwards the to-be-forwarded traffic at increased power consumption. As in the foregoing example, in T_{sample-period-1}, it is assumed that Tₛₐₘₚₗₑ₋ᵢₙₜₑᵣᵥₐₗ₋₆ is the current sampling interval, and Tₛₐₘₚₗₑ₋ᵢₙₜₑᵣᵥₐₗ₋₅ is the previous sampling interval. Because traffic collected in Tₛₐₘₚₗₑ₋ᵢₙₜₑᵣᵥₐₗ₋₅ is less than traffic collected in Tₛₐₘₚₗₑ₋ᵢₙₜₑᵣᵥₐₗ₋₆, the switch chip may determine that the plurality of AI chips have entered the communication phase from the computing phase, thereby increasing the subsequent power consumption for forwarding traffic.

More specifically, the switch chip may reduce the power consumption for the to-be-forwarded traffic in the following manner.

After determining that the plurality of AI chips have switched from the communication phase to the computing phase, the switch chip performs at least one of the following operations: (1) reducing an operating frequency of the switch chip stepwise, for example, reducing the operating frequency of the switch chip by one level every 100 µs; (2) reducing an operating voltage of the switch chip stepwise, for example, reducing the operating voltage of the switch chip by one level every 1000 µs; and (3) disabling a serializer/deserializer (serializer/deserializer, SerDes) of the switch chip, for example, disabling the SerDes for 1 ms by the switch chip. In this way, after reducing the operating frequency or the operating voltage or disabling the SerDes, the switch chip performs traffic transmission.

A priority of reducing the operating frequency of the switch chip stepwise is higher than a priority of reducing the operating voltage of the switch chip stepwise, and the priority of reducing the operating voltage of the switch chip stepwise is higher than a priority of disabling the SerDes of the switch chip. For example, the switch chip continuously reduces the operating frequency of the switch chip, and when the operating frequency can no longer be reduced, the switch chip further reduces the operating voltage of the switch chip. For another example, the switch chip continuously reduces the operating voltage of the switch chip, and when the operating voltage can no longer be reduced, the switch chip disables the SerDes of the switch chip.

More specifically, the switch chip may reduce the power consumption for the to-be-forwarded traffic in the following manners.
(a) After determining that the plurality of AI chips have switched from the computing phase to the communication phase, the switch chip performs at least one of the following at a moment when the to-be-forwarded traffic arrives: (1) increasing the operating frequency of the switch chip, for example, directly increasing the operating frequency of the switch chip to a maximum operating frequency by the switch chip; (2) increasing the operating voltage of the switch chip, for example, directly increasing the operating voltage of the switch chip to a maximum operating voltage by the switch chip; and (3) enabling the SerDes of the switch chip, for example, directly enabling all SerDes by the switch chip.
(b) Because startup time of the SerDes is long (generally 500 µs), and may affect traffic forwarding efficiency of the switch chip, the switch chip may increase the power consumption in advance. In other words, the switch chip may perform at least one of the following at a moment, that is, a target moment, earlier than the moment when the to-be-forwarded traffic arrives: (1) increasing the operating frequency of the switch chip, for example, directly increasing the operating frequency of the switch chip to a maximum operating frequency by the switch chip; (2) increasing the operating voltage of the switch chip, for example, directly increasing the operating voltage of the switch chip to a maximum operating voltage by the switch chip; and (3) enabling the SerDes of the switch chip, for example, directly enabling all the SerDes by the switch chip.

More specifically, the switch chip may determine, in the following manner, whether to increase the power consumption in real time or to increase the power consumption in advance.

Because the switch chip has already stored traffic characteristic parameters calculated in a previous statistical period, that is, a power consumption adjustment policy, when the switch chip needs to increase the power consumption in a current statistical period, the switch chip may determine, based on these traffic characteristic parameters, whether to increase the power consumption in real time or to increase the power consumption in advance.

If average duration for which the plurality of AI chips are in the communication phase in the previous statistical period is zero, it indicates that the plurality of AI chips are in a sleep state in the previous statistical period, and the switch chip may increase the power consumption in real time. Therefore, the switch chip may perform at least one of the following at a moment when the to-be-forwarded traffic arrives: enabling the SerDes of the switch chip, increasing the operating voltage of the switch chip, and increasing the operating frequency of the switch chip (generally, a priority of enabling the SerDes of the switch chip is higher than a priority of increasing the operating voltage of the switch chip, and the priority of increasing the operating voltage of the switch chip is higher than a priority of increasing the operating frequency of the switch chip). As in the foregoing example, if T_{average} is 0, the switch chip may increase the power consumption for subsequent traffic at a moment when the traffic arrives, and forward the traffic at increased power consumption.

If the average duration for which the plurality of AI chips are in the communication phase in the previous statistical period and average duration for which the plurality of AI chips are in the computing phase in the previous statistical period are both non-zero, and a standard deviation of duration for which the plurality of AI chips are in the communication phase in the previous statistical period is greater than or equal to a preset first threshold (where a value of the threshold may be set based on an actual requirement, and is not limited herein), it indicates that traffic between the plurality of AI chips does not conform to a typical AI traffic model (that is, different communication phases have different duration, while in the typical AI traffic model, different communication phases usually have same duration), and the switch chip may increase the power consumption in real time. In this case, the switch chip performs at least one of the following at the moment when the to-be-forwarded traffic arrives: increasing the operating frequency of the switch chip, increasing the operating voltage of the switch chip, and enabling the SerDes of the switch chip. As in the foregoing example, if T_{average}>0, t_{average}>0, and T_{standard-deviation}>T_{sd-threshold} (the foregoing first threshold), the switch chip may increase the power consumption for the subsequent traffic at a moment when the traffic arrives, and forward the traffic at increased power consumption.

If the average duration for which the plurality of AI chips are in the communication phase in the previous statistical period and average duration for which the plurality of AI chips are in the computing phase in the previous statistical period are both non-zero, and a standard deviation of duration for which the plurality of AI chips are in the computing phase in the previous statistical period is greater than or equal to a preset second threshold (where a value of the threshold may be set based on an actual requirement, and is not limited herein), it indicates that traffic between the plurality of AI chips does not conform to a typical AI traffic model (that is, different computing phases have different duration, while in the typical AI traffic model, different communication phases usually have same duration), and the switch chip may increase the power consumption in real time. In this case, the switch chip performs at least one of the following at the moment when the to-be-forwarded traffic arrives: increasing the operating frequency of the switch chip, increasing the operating voltage of the switch chip, and enabling the SerDes of the switch chip. As in the foregoing example, if T_{average}>0, t_{average}>0, and t_{standard-deviation}>t_{sd-threshold} (the foregoing second threshold), the switch chip may increase the power consumption for the subsequent traffic at a moment when the traffic arrives, and forward the traffic at increased power consumption.

If the average duration for which the plurality of AI chips are in the communication phase in the previous statistical period and the average duration for which the plurality of AI chips are in the computing phase in the previous statistical period are both non-zero, the standard deviation of the duration for which the plurality of AI chips are in the communication phase in the previous statistical period is less than the preset first threshold, and the standard deviation of the duration for which the plurality of AI chips are in the computing phase in the previous statistical period is less than the preset second threshold, it indicates that traffic between the plurality of AI chips conforms to a typical AI traffic model, and the switch chip may increase the power consumption in advance. In this case, the switch chip performs at least one of the following at the target moment: increasing the operating frequency of the switch chip, increasing the operating voltage of the switch chip, and enabling the SerDes of the switch chip.

A difference between the target moment and the moment when the to-be-forwarded traffic arrives is calculated based on the average duration for which the plurality of AI chips are in the computing phase in the previous statistical period and the standard deviation of the duration for which the plurality of AI chips are in the computing phase in the previous statistical period.

As in the foregoing example, if T_{average}>0, t_{average}>0, T_{standard-deviation}<T_{sd-threshold}, and t_{standard-deviation}<t_{sd-threshold}, the switch chip may increase the power consumption for the subsequent traffic at a moment in advance, and forward the traffic at increased power consumption. The moment is t₀, and t₀=t₁+(t_{average}-t_{standard-deviation}-T_{serdes-up}). Because the power consumption is increased when the AI chips enter the communication phase from the computing phase, t₁ is an initial moment when the AI chips are in a most recent computing phase, it can be learned that t₀ is between t₁ and t₂, and t₂ is a moment when the AI chips enter a current communication phase from the most recent computing phase (that is, an initial moment of the current computing phase of the AI chips). After the AI chips enter the communication phase, a moment after t₂ is a moment when the subsequent traffic arrives.

In this embodiment of this application, the switch chip may be configured to perform traffic transmission between the plurality of AI chips, the plurality of AI chips may be configured to train a neural network model, and in a training process, the plurality of AI chips may switch back and forth between the computing phase and the communication phase. In an operating process of the switch chip, the switch chip may sample traffic that is being forwarded by the switch chip, to obtain sampled traffic. Then, the switch chip may detect, based on the sampled traffic, whether the plurality of AI chips have switched between the computing phase and the communication phase, to determine whether to adjust the subsequent power consumption for the to-be-forwarded traffic. If the plurality of AI chips have switched from the communication phase to the computing phase, the switch chip may reduce the power consumption for the to-be-forwarded traffic, and forward the to-be-forwarded traffic at reduced power consumption. If the plurality of AI chips have switched from the computing phase to the communication phase, the switch chip may increase the power consumption for the to-be-forwarded traffic, and forward the to-be-forwarded traffic at increased power consumption. In the foregoing process, the switch chip has a power consumption adjustment capability, and can accurately identify, based on forwarded traffic, a change in phases of the AI chips, and adaptively adjust the power consumption for traffic transmission based on the change. It can be learned that, when the AI chips are in the communication phase, the switch chip may forward traffic between the AI chips in a high power consumption state, and when the AI chips are in the computing phase, the switch chip may forward traffic between the AI chips in a low power consumption state. In this way, the power consumption of the switch chip can match an actual workload, thereby avoiding inflated power consumption of the switch chip and achieving power consumption optimization.

Further, in this embodiment of this application, when the switch chip needs to reduce the power consumption, a solution of incrementally reducing the operating frequency, incrementally reducing the operating voltage, and disabling a part of SerDes is used, so that when switching from the communication phase to the computing phase has occurred, the switch chip can smoothly adjust the power consumption, and traffic forwarded by the switch chip decreases continuously and transitions smoothly.

Further, in this embodiment of this application, when the switch chip needs to increase the power consumption, the switch chip determines whether a waveform of current traffic conforms to a typical AI traffic model, to determine whether to increase the power consumption in real time or increase the power consumption in advance, thereby avoiding impact of a long reset (startup) time of the SerDes in the switch chip on communication between the AI chips.

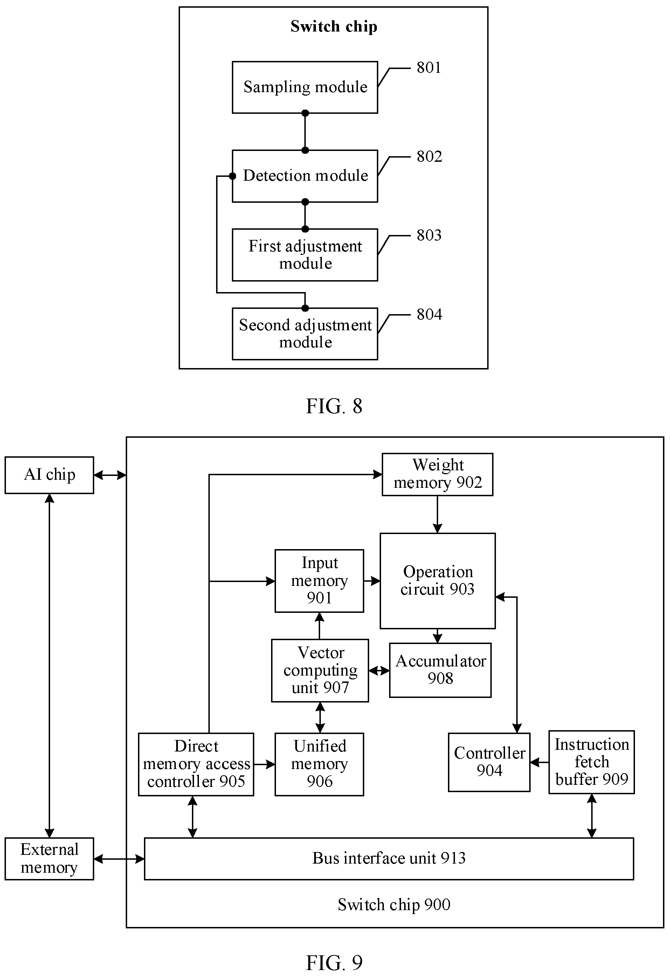

The foregoing describes in detail the power consumption optimization method for a switch chip provided in embodiments of this application. The following describes a switch chip provided in embodiments of this application. FIG. 8 is a diagram of a structure of a switch chip according to an embodiment of this application. As shown in FIG. 8, the switch chip is configured to forward traffic between a plurality of AI chips, the plurality of AI chips are configured to train a neural network, and in a training process of the neural network, the plurality of AI chips may be in a computing phase or a communication phase. The switch chip includes:
a sampling module 801, configured to sample the traffic forwarded by the switch chip, to obtain sampled traffic;
a detection module 802, configured to detect, based on the sampled traffic, whether the plurality of AI chips have switched between the computing phase and the communication phase; and
a first adjustment module 803, configured to: if the plurality of AI chips have switched from the communication phase to the computing phase, reduce power consumption for to-be-forwarded traffic; or
a second adjustment module 804, configured to: if the plurality of AI chips have switched from the computing phase to the communication phase, increase the power consumption for the to-be-forwarded traffic.

In a possible implementation, the training process includes a plurality of sampling intervals, the plurality of sampling intervals include a current sampling interval, the sampled traffic is traffic sampled in the current sampling interval, and the detection module is configured to detect, based on traffic sampled in a previous sampling interval and the traffic sampled in the current sampling interval, whether the plurality of AI chips have switched between the computing phase and the communication phase.

In a possible implementation, the first adjustment module is configured to: if the traffic sampled in the previous sampling interval is less than the traffic sampled in the current sampling interval, determine that the plurality of AI chips have switched from the communication phase to the computing phase; and reduce the power consumption for the to-be-forwarded traffic.

In a possible implementation, the second adjustment module is configured to: if the traffic sampled in the previous sampling interval is greater than the traffic sampled in the current sampling interval, determine that the plurality of AI chips have switched from the computing phase to the communication phase; and increase the power consumption for the to-be-forwarded traffic.

In a possible implementation, the first adjustment module is configured to perform at least one of the following: reducing an operating frequency of the switch chip stepwise, reducing an operating voltage of the switch chip stepwise, and disabling a serializer/deserializer SerDes of the switch chip, where a priority of reducing the operating frequency of the switch chip stepwise is higher than a priority of reducing the operating voltage of the switch chip stepwise, and the priority of reducing the operating voltage of the switch chip stepwise is higher than a priority of disabling the SerDes of the switch chip.

In a possible implementation, the second adjustment module is configured to: perform at least one of the following at a moment when the to-be-forwarded traffic arrives: increasing the operating frequency of the switch chip, increasing the operating voltage of the switch chip, and enabling the SerDes of the switch chip; or perform at least one of the following at a target moment: increasing the operating frequency of the switch chip, increasing the operating voltage of the switch chip, and enabling the SerDes of the switch chip, where the target moment is earlier than the moment when the to-be-forwarded traffic arrives.

In a possible implementation, the training process includes a plurality of statistical periods, the plurality of statistical periods include a previous statistical period and a current statistical period, the current statistical period includes the previous sampling interval and the current sampling interval, and the second adjustment module is configured to: if average duration for which the plurality of AI chips are in the communication phase in the previous statistical period is zero, perform at least one of the following at the moment when the to-be-forwarded traffic arrives: increasing the operating frequency of the switch chip, increasing the operating voltage of the switch chip, and enabling the SerDes of the switch chip; or if the average duration for which the plurality of AI chips are in the communication phase in the previous statistical period and average duration for which the plurality of AI chips are in the computing phase in the previous statistical period are both non-zero, and a standard deviation of duration for which the plurality of AI chips are in the communication phase in the previous statistical period is greater than or equal to a preset first threshold, perform at least one of the following at the moment when the to-be-forwarded traffic arrives: increasing the operating frequency of the switch chip, increasing the operating voltage of the switch chip, and enabling the SerDes of the switch chip; or if the average duration for which the plurality of AI chips are in the communication phase in the previous statistical period and the average duration for which the plurality of AI chips are in the computing phase in the previous statistical period are both non-zero, and a standard deviation of duration for which the plurality of AI chips are in the computing phase in the previous statistical period is greater than or equal to a preset second threshold, perform at least one of the following at the moment when the to-be-forwarded traffic arrives: increasing the operating frequency of the switch chip, increasing the operating voltage of the switch chip, and enabling the SerDes of the switch chip.

In a possible implementation, the second adjustment module is configured to: if the average duration for which the plurality of AI chips are in the communication phase in the previous statistical period and the average duration for which the plurality of AI chips are in the computing phase in the previous statistical period are both non-zero, the standard deviation of the duration for which the plurality of AI chips are in the communication phase in the previous statistical period is less than the preset first threshold, and the standard deviation of the duration for which the plurality of AI chips are in the computing phase in the previous statistical period is less than the preset second threshold, perform at least one of the following at the target moment: increasing the operating frequency of the switch chip, increasing the operating voltage of the switch chip, and enabling the SerDes of the switch chip.

In a possible implementation, the average duration for which the plurality of AI chips are in the communication phase in the previous statistical period is calculated based on a quantity of times the plurality of AI chips are in the communication phase in the previous statistical period and duration of each time the plurality of AI chips are in the communication phase in the previous statistical period. The average duration for which the plurality of AI chips are in the computing phase in the previous statistical period is calculated based on a quantity of times the plurality of AI chips are in the computing phase in the previous statistical period and duration of each time the plurality of AI chips are in the computing phase in the previous statistical period. The standard deviation of the duration for which the plurality of AI chips are in the communication phase in the previous statistical period is calculated based on the average duration for which the plurality of AI chips are in the communication phase in the previous statistical period and the duration of each time the plurality of AI chips are in the communication phase in the previous statistical period. The standard deviation of the duration for which the plurality of AI chips are in the computing phase in the previous statistical period is calculated based on the average duration for which the plurality of AI chips are in the computing phase in the previous statistical period and the duration of each time the plurality of AI chips are in the computing phase in the previous statistical period.

In a possible implementation, a difference between the target moment and the moment when the to-be-forwarded traffic arrives is calculated based on the average duration for which the plurality of AI chips are in the computing phase in the previous statistical period and the standard deviation of the duration for which the plurality of AI chips are in the computing phase in the previous statistical period.

It should be noted that, because content such as information exchange and an execution process between the modules/units of the apparatus is based on a same concept as the method embodiments of this application, technical effects brought by the content are the same as those brought by the method embodiments of this application. For specific content, refer to the descriptions in the foregoing method embodiments of this application. Details are not described herein again.

An embodiment of this application further relates to an interconnection apparatus. The apparatus may be presented as a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the power consumption optimization method described in the foregoing embodiments. Optionally, the storage unit is a storage unit in the chip, for example, a register or a cache. Alternatively, the storage unit may be a storage unit that is in a wireless access device and that is outside the chip, for example, a read-only memory (read-only memory, ROM), another type of static storage device that can store static information and instructions, or a random access memory (random access memory, RAM).

Specifically, FIG. 9 is a diagram of a structure of a chip according to an embodiment of this application. The chip may be represented as a neural processing unit switch chip 900. The switch chip 900 is mounted on an AI chip as a coprocessor, and the AI chip allocates a task (for example, forwarding traffic from the AI chip) to the switch chip 900. A core part of the switch chip is an operation circuit 903. A controller 904 controls the operation circuit 903 to extract matrix data in a memory and perform a multiplication operation.

In some implementations, the operation circuit 903 internally includes a plurality of processing engines (Process Engines, PEs). In some implementations, the operation circuit 903 is a two-dimensional systolic array. The operation circuit 903 may alternatively be a one-dimensional systolic array or another electronic circuit that can perform mathematical operations such as multiplication and addition. In some implementations, the operation circuit 903 is a general-purpose matrix processor.

For example, it is assumed that there is an input matrix A, a weight matrix B, and an output matrix C. The operation circuit fetches, from a weight memory 902, data corresponding to the matrix B, and buffers the data on each PE in the operation circuit. The operation circuit fetches data of the matrix A from an input memory 901, to perform a matrix operation on the matrix B, and stores an obtained partial result or an obtained final result of the matrix in an accumulator (accumulator) 908.

A unified memory 906 is configured to store input data and output data. Weight data is directly transferred to the weight memory 902 via a memory access controller (Direct Memory Access Controller, DMAC) 905. The input data is also transferred to the unified memory 906 by using the DMAC.

A BIU is a bus interface unit, namely, a bus interface unit 913, and is configured to perform interaction between an AXI bus and the DMAC and between the AXI bus and an instruction fetch buffer (Instruction Fetch Buffer, IFB) 909.

The bus interface unit (Bus Interface Unit, BIU for short) 913 is used by the instruction fetch buffer 909 to obtain instructions from an external memory, and is further used by the memory access controller 905 to obtain original data of the input matrix A or the weight matrix B from the external memory.

The DMAC is mainly configured to transfer input data in the external memory DDR to the unified memory 906, or transfer the weight data to the weight memory 902, or transfer the input data to the input memory 901.

A vector computing unit 907 includes a plurality of operation processing units. If needed, the vector computing unit 907 performs further processing, such as vector multiplication, vector addition, an exponential operation, a logarithm operation, and size comparison, on an output of the operation circuit 903. The vector computing unit 907 is mainly configured to cooperate with the operation circuit 903 to complete parameter operation for the power consumption adjustment policy, and the like.

In some implementations, the vector computing unit 907 can store a processed output vector in the unified memory 906. For example, the vector computing unit 907 may apply a linear function or a non-linear function to the output of the operation circuit 903.

The instruction fetch buffer (instruction fetch buffer) 909 connected to the controller 904 is configured to store instructions used by the controller 904.

The unified memory 906, the input memory 901, the weight memory 902, and the instruction fetch buffer 909 are all on-chip memories. The external memory is private for a hardware architecture of the switch chip.

Any one of the processors mentioned above may be a general-purpose central processing unit, a microprocessor, an ASIC, or one or more integrated circuits for controlling execution of the foregoing programs.

An embodiment of this application further relates to a computer storage medium. The computer-readable storage medium stores a program for signal processing, and when the program is run on a computer, the computer is caused to perform the steps performed by the foregoing switch chip.

An embodiment of this application further relates to a computer program product. The computer program product stores instructions, and when the instructions are executed by a computer, the computer is caused to perform the steps performed by the foregoing switch chip.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, another division may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to conventional technologies, or all or a part of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A power consumption optimization method for a switch chip, wherein the switch chip is configured to forward traffic between a plurality of artificial intelligence AI chips, the plurality of AI chips are configured to train a neural network, in a training process of the neural network, the plurality of AI chips are in a computing phase or a communication phase, and the method comprises:
sampling, by the switch chip, the traffic forwarded by the switch chip, to obtain sampled traffic;
detecting, by the switch chip based on the sampled traffic, whether the plurality of AI chips have switched between the computing phase and the communication phase; and
if the plurality of AI chips have switched from the communication phase to the computing phase, reducing, by the switch chip, power consumption for to-be-forwarded traffic; or
if the plurality of AI chips have switched from the computing phase to the communication phase, increasing, by the switch chip, the power consumption for the to-be-forwarded traffic.

2. The method according to claim 1, wherein the training process comprises a plurality of sampling intervals, the plurality of sampling intervals comprise a current sampling interval, the sampled traffic is traffic sampled in the current sampling interval, and the detecting, by the switch chip based on the sampled traffic, whether the plurality of AI chips have switched between the computing phase and the communication phase comprises:
detecting, by the switch chip based on traffic sampled in a previous sampling interval and the traffic sampled in the current sampling interval, whether the plurality of AI chips have switched between the computing phase and the communication phase.

3. The method according to claim 2, wherein if the plurality of AI chips have switched from the communication phase to the computing phase, reducing, by the switch chip, the power consumption for the to-be-forwarded traffic comprises:
if the traffic sampled in the previous sampling interval is less than the traffic sampled in the current sampling interval, determining, by the switch chip, that the plurality of AI chips have switched from the communication phase to the computing phase, and reducing the power consumption for the to-be-forwarded traffic.

4. The method according to claim 2, wherein if the plurality of AI chips have switched from the computing phase to the communication phase, increasing, by the switch chip, the power consumption for the to-be-forwarded traffic comprises:
if the traffic sampled in the previous sampling interval is greater than the traffic sampled in the current sampling interval, determining, by the switch chip, that the plurality of AI chips have switched from the computing phase to the communication phase, and increasing the power consumption for the to-be-forwarded traffic.

5. The method according to claim 3, wherein the reducing, by the switch chip, the power consumption for the to-be-forwarded traffic comprises:
performing, by the switch chip, at least one of the following: reducing an operating frequency of the switch chip stepwise, reducing an operating voltage of the switch chip stepwise, and disabling a serializer/deserializer SerDes of the switch chip, wherein a priority of reducing the operating frequency of the switch chip stepwise is higher than a priority of reducing the operating voltage of the switch chip stepwise, and the priority of reducing the operating voltage of the switch chip stepwise is higher than a priority of disabling the SerDes of the switch chip.

6. The method according to claim 4, wherein the increasing, by the switch chip, the power consumption for the to-be-forwarded traffic comprises:
performing, by the switch chip, at least one of the following at a moment when the to-be-forwarded traffic arrives: increasing an operating frequency of the switch chip, increasing an operating voltage of the switch chip, and enabling a SerDes of the switch chip; or
performing, by the switch chip, at least one of the following at a target moment: increasing the operating frequency of the switch chip, increasing the operating voltage of the switch chip, and enabling the SerDes of the switch chip, wherein the target moment is earlier than the moment when the to-be-forwarded traffic arrives.

7. The method according to claim 6, wherein the training process comprises a plurality of statistical periods, the plurality of statistical periods comprise a previous statistical period and a current statistical period, the current statistical period comprises the previous sampling interval and the current sampling interval, and the performing, by the switch chip, at least one of the following at the moment when the to-be-forwarded traffic arrives: increasing the operating frequency of the switch chip, increasing the operating voltage of the switch chip, and enabling the SerDes of the switch chip comprises:
if average duration for which the plurality of AI chips are in the communication phase in the previous statistical period is zero, performing, by the switch chip, at least one of the following at the moment when the to-be-forwarded traffic arrives: increasing the operating frequency of the switch chip, increasing the operating voltage of the switch chip, and enabling the SerDes of the switch chip; or
if the average duration for which the plurality of AI chips are in the communication phase in the previous statistical period and average duration for which the plurality of AI chips are in the computing phase in the previous statistical period are both non-zero, and a standard deviation of duration for which the plurality of AI chips are in the communication phase in the previous statistical period is greater than or equal to a preset first threshold, performing, by the switch chip, at least one of the following at the moment when the to-be-forwarded traffic arrives: increasing the operating frequency of the switch chip, increasing the operating voltage of the switch chip, and enabling the SerDes of the switch chip; or
if the average duration for which the plurality of AI chips are in the communication phase in the previous statistical period and the average duration for which the plurality of AI chips are in the computing phase in the previous statistical period are both non-zero, and a standard deviation of duration for which the plurality of AI chips are in the computing phase in the previous statistical period is greater than or equal to a preset second threshold, performing, by the switch chip, at least one of the following at the moment when the to-be-forwarded traffic arrives: increasing the operating frequency of the switch chip, increasing the operating voltage of the switch chip, and enabling the SerDes of the switch chip.

8. The method according to claim 6, wherein the performing, by the switch chip, at least one of the following at the target moment: increasing the operating frequency of the switch chip, increasing the operating voltage of the switch chip, and enabling the SerDes of the switch chip comprises:
if average duration for which the plurality of AI chips are in the communication phase in the previous statistical period and average duration for which the plurality of AI chips are in the computing phase in the previous statistical period are both non-zero, a standard deviation of duration for which the plurality of AI chips are in the communication phase in the previous statistical period is less than a preset first threshold, and a standard deviation of duration for which the plurality of AI chips are in the computing phase in the previous statistical period is less than a preset second threshold, performing, by the switch chip, at least one of the following at the target moment: increasing the operating frequency of the switch chip, increasing the operating voltage of the switch chip, and enabling the SerDes of the switch chip.

9. The method according to claim 7 or 8, wherein the average duration for which the plurality of AI chips are in the communication phase in the previous statistical period is calculated based on a quantity of times the plurality of AI chips are in the communication phase in the previous statistical period and duration of each time the plurality of AI chips are in the communication phase in the previous statistical period;
the average duration for which the plurality of AI chips are in the computing phase in the previous statistical period is calculated based on a quantity of times the plurality of AI chips are in the computing phase in the previous statistical period and duration of each time the plurality of AI chips are in the computing phase in the previous statistical period;
the standard deviation of the duration for which the plurality of AI chips are in the communication phase in the previous statistical period is calculated based on the average duration for which the plurality of AI chips are in the communication phase in the previous statistical period and the duration of each time the plurality of AI chips are in the communication phase in the previous statistical period; and
the standard deviation of the duration for which the plurality of AI chips are in the computing phase in the previous statistical period is calculated based on the average duration for which the plurality of AI chips are in the computing phase in the previous statistical period and the duration of each time the plurality of AI chips are in the computing phase in the previous statistical period.

10. The method according to claim 8, wherein a difference between the target moment and the moment when the to-be-forwarded traffic arrives is calculated based on the average duration for which the plurality of AI chips are in the computing phase in the previous statistical period and the standard deviation of the duration for which the plurality of AI chips are in the computing phase in the previous statistical period.

11. A switch chip, wherein the switch chip is configured to forward traffic between a plurality of AI chips, the plurality of AI chips are configured to train a neural network, in a training process of the neural network, the plurality of AI chips are in a computing phase or a communication phase, and the switch chip comprises:
a sampling module, configured to sample the traffic forwarded by the switch chip, to obtain sampled traffic;
a detection module, configured to detect, based on the sampled traffic, whether the plurality of AI chips have switched between the computing phase and the communication phase; and
a first adjustment module, configured to: if the plurality of AI chips have switched from the communication phase to the computing phase, reduce power consumption for to-be-forwarded traffic; or
a second adjustment module, configured to: if the plurality of AI chips have switched from the computing phase to the communication phase, increase the power consumption for the to-be-forwarded traffic.

12. The switch chip according to claim 11, wherein the training process comprises a plurality of sampling intervals, the plurality of sampling intervals comprise a current sampling interval, the sampled traffic is traffic sampled in the current sampling interval, and the detection module is configured to detect, based on traffic sampled in a previous sampling interval and the traffic sampled in the current sampling interval, whether the plurality of AI chips have switched between the computing phase and the communication phase.

13. The switch chip according to claim 12, wherein the first adjustment module is configured to: if the traffic sampled in the previous sampling interval is less than the traffic sampled in the current sampling interval, determine that the plurality of AI chips have switched from the communication phase to the computing phase; and reduce the power consumption for the to-be-forwarded traffic.

14. The switch chip according to claim 12, wherein the second adjustment module is configured to: if the traffic sampled in the previous sampling interval is greater than the traffic sampled in the current sampling interval, determine that the plurality of AI chips have switched from the computing phase to the communication phase; and increase the power consumption for the to-be-forwarded traffic.

15. The switch chip according to claim 13, wherein the first adjustment module is configured to perform at least one of the following: reducing an operating frequency of the switch chip stepwise, reducing an operating voltage of the switch chip stepwise, and disabling a serializer/deserializer SerDes of the switch chip, wherein a priority of reducing the operating frequency of the switch chip stepwise is higher than a priority of reducing the operating voltage of the switch chip stepwise, and the priority of reducing the operating voltage of the switch chip stepwise is higher than a priority of disabling the SerDes of the switch chip.

16. The switch chip according to claim 14, wherein the second adjustment module is configured to:
perform at least one of the following at a moment when the to-be-forwarded traffic arrives: increasing an operating frequency of the switch chip, increasing an operating voltage of the switch chip, and enabling a SerDes of the switch chip; or
perform at least one of the following at a target moment: increasing the operating frequency of the switch chip, increasing the operating voltage of the switch chip, and enabling the SerDes of the switch chip, wherein the target moment is earlier than the moment when the to-be-forwarded traffic arrives.

17. The switch chip according to claim 16, wherein the training process comprises a plurality of statistical periods, the plurality of statistical periods comprise a previous statistical period and a current statistical period, the current statistical period comprises the previous sampling interval and the current sampling interval, and the second adjustment module is configured to:
if average duration for which the plurality of AI chips are in the communication phase in the previous statistical period is zero, perform at least one of the following at the moment when the to-be-forwarded traffic arrives: increasing the operating frequency of the switch chip, increasing the operating voltage of the switch chip, and enabling the SerDes of the switch chip; or
if the average duration for which the plurality of AI chips are in the communication phase in the previous statistical period and average duration for which the plurality of AI chips are in the computing phase in the previous statistical period are both non-zero, and a standard deviation of duration for which the plurality of AI chips are in the communication phase in the previous statistical period is greater than or equal to a preset first threshold, perform at least one of the following at the moment when the to-be-forwarded traffic arrives: increasing the operating frequency of the switch chip, increasing the operating voltage of the switch chip, and enabling the SerDes of the switch chip; or
if the average duration for which the plurality of AI chips are in the communication phase in the previous statistical period and the average duration for which the plurality of AI chips are in the computing phase in the previous statistical period are both non-zero, and a standard deviation of duration for which the plurality of AI chips are in the computing phase in the previous statistical period is greater than or equal to a preset second threshold, perform at least one of the following at the moment when the to-be-forwarded traffic arrives: increasing the operating frequency of the switch chip, increasing the operating voltage of the switch chip, and enabling the SerDes of the switch chip.

18. The switch chip according to claim 16, wherein the second adjustment module is configured to: if average duration for which the plurality of AI chips are in the communication phase in the previous statistical period and average duration for which the plurality of AI chips are in the computing phase in the previous statistical period are both non-zero, a standard deviation of duration for which the plurality of AI chips are in the communication phase in the previous statistical period is less than a preset first threshold, and a standard deviation of duration for which the plurality of AI chips are in the computing phase in the previous statistical period is less than a preset second threshold, perform at least one of the following at the target moment: increasing the operating frequency of the switch chip, increasing the operating voltage of the switch chip, and enabling the SerDes of the switch chip.

19. The switch chip according to claim 17 or 18, wherein the average duration for which the plurality of AI chips are in the communication phase in the previous statistical period is calculated based on a quantity of times the plurality of AI chips are in the communication phase in the previous statistical period and duration of each time the plurality of AI chips are in the communication phase in the previous statistical period;
the average duration for which the plurality of AI chips are in the computing phase in the previous statistical period is calculated based on a quantity of times the plurality of AI chips are in the computing phase in the previous statistical period and duration of each time the plurality of AI chips are in the computing phase in the previous statistical period;
the standard deviation of the duration for which the plurality of AI chips are in the communication phase in the previous statistical period is calculated based on the average duration for which the plurality of AI chips are in the communication phase in the previous statistical period and the duration of each time the plurality of AI chips are in the communication phase in the previous statistical period; and
the standard deviation of the duration for which the plurality of AI chips are in the computing phase in the previous statistical period is calculated based on the average duration for which the plurality of AI chips are in the computing phase in the previous statistical period and the duration of each time the plurality of AI chips are in the computing phase in the previous statistical period.

20. The switch chip according to claim 18, wherein a difference between the target moment and the moment when the to-be-forwarded traffic arrives is calculated based on the average duration for which the plurality of AI chips are in the computing phase in the previous statistical period and the standard deviation of the duration for which the plurality of AI chips are in the computing phase in the previous statistical period.

21. An interconnection apparatus, wherein the apparatus comprises a memory and a processor, the memory stores code, the processor is configured to execute the code, and when the code is executed, the summary generation apparatus performs the method according to any one of claims 1 to 10.

22. A computer storage medium, wherein the computer storage medium stores one or more instructions, and when the instructions are executed by one or more computers, the one or more computers are caused to implement the method according to any one of claims 1 to 10.

23. A computer program product, wherein the computer program product stores instructions, and when the instructions are executed by a computer, the computer is caused to implement the method according to any one of claims 1 to 10.
